(19) Europäisches Patentamt
European Patent Office
Office européen des brevets

(11) **EP 4 277 147 A1**

(12) **EUROPEAN PATENT APPLICATION**
published in accordance with Art. 153(4) EPC

(43) Date of publication:
**15.11.2023 Bulletin 2023/46**

(21) Application number: **22736915.4**

(22) Date of filing: **11.01.2022**

(51) International Patent Classification (IPC):
*H04B 7/0408* (2017.01)        *H04B 7/06* (2006.01)
*H04B 17/373* (2015.01)        *H04L 5/00* (2006.01)

(52) Cooperative Patent Classification (CPC):
**H04B 7/0408; H04B 7/06; H04B 17/373;
H04L 5/00;** Y02D 30/70

(86) International application number:
**PCT/KR2022/000404**

(87) International publication number:
**WO 2022/149938 (14.07.2022 Gazette 2022/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.01.2021 KR 20210003606**

(71) Applicant: **LG Electronics Inc.
Yeongdeungpo-gu
Seoul 07336 (KR)**

(72) Inventors:
• **KANG, Jiwon**
  **Seoul 06772 (KR)**
• **KIM, Seonwook**
  **Seoul 06772 (KR)**
• **YANG, Suckchel**
  **Seoul 06772 (KR)**

(74) Representative: **Maikowski & Ninnemann
Patentanwälte Partnerschaft mbB
Postfach 15 09 20
10671 Berlin (DE)**

(54) **METHOD AND DEVICE FOR TRANSMITTING AND RECEIVING SIGNAL ON BASIS OF SPATIAL PARAMETER IN WIRELESS COMMUNICATION SYSTEM**

(57)    Disclosed are a method and a device for transmitting and receiving a signal on the basis of a spatial parameter in a wireless communication system. A method for performing downlink reception or uplink transmission by a terminal in a wireless communication system according to an embodiment of the present disclosure may comprise the steps of: transmitting information related to a beam switching time of the terminal to a base station; receiving, from the base station, configuration information on a predetermined threshold value; receiving, from the base station, downlink control information (DCI) including information on the downlink reception or the uplink transmission; and on the basis of the beam switching time and the predetermined threshold value, applying one spatial parameter set among multiple spatial parameter sets to perform the downlink reception or the uplink transmission.

FIG.9

```
              START
                │
   ┌────────────────────────────┐
   │ Report information related to │── S910
   │ beam switching timing         │
   └────────────────────────────┘
                │
   ┌────────────────────────────┐
   │ Receive configuration information │── S920
   │ for predetermined threshold      │
   └────────────────────────────┘
                │
   ┌────────────────────────────┐
   │        Receive DCI           │── S930
   └────────────────────────────┘
                │
   ┌────────────────────────────┐
   │ Perform downlink reception or │
   │ uplink transmission           │── S940
   │ by using spatial parameter set│
   │ based on beam switching timing│
   │ and predetermined threshold   │
   └────────────────────────────┘
                │
               END
```

**Description**

[Technical Field]

The present disclosure relates to a wireless communication system, and in more detail, relates to a method and an apparatus of transmitting and receiving a signal based on a spatial parameter in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), Inband Full Duplex, Non-Orthogonal Multiple Access (NOMA), Super wideband Support, Device Networking, etc. have been researched.

[Disclosure]

[Technical Problem]

A technical problem of the present disclosure is to provide a method and an apparatus of transmitting and receiving a signal based on a spatial parameter.

An additional technical problem of the present disclosure is to provide a method and an apparatus of determining a spatial parameter based on beam switching timing of a terminal and performing uplink signal transmission or downlink signal reception based on a determined spatial parameter.

An additional technical problem of the present disclosure is to provide a method and an apparatus of determining a threshold related to beam switching timing which is a basis for determining a spatial parameter when subcarrier spacing of a target channel/signal and subcarrier spacing of a channel triggering a target channel/signal are different.

The technical objects to be achieved by the present disclosure are not limited to the above-described technical objects, and other technical objects which are not described herein will be clearly understood by those skilled in the pertinent art from the following description.

[Technical Solution]

A method of performing downlink reception or uplink transmission by a terminal in a wireless communication system according to an aspect of the present disclosure may include transmitting to a base station information related to beam switching timing of the terminal; receiving configuration information for a predetermined threshold from the base station; receiving downlink control information (DCI) including information for the downlink reception or the uplink transmission from the base station; and performing the downlink reception or the uplink transmission by applying one spatial parameter set among a plurality of spatial parameter sets based on the beam switching timing and the predetermined threshold.

A method of performing downlink transmission or uplink reception by a base station in a wireless communication system according to an additional aspect of the present disclosure may include receiving information related to beam switching timing of a terminal from the terminal; transmitting to the terminal configuration information for a predetermined threshold; transmitting to the terminal downlink control information (DCI) including information for the downlink transmission or the uplink reception; and performing the downlink transmission or the uplink reception by applying one spatial parameter set among a plurality of spatial parameter sets based on the beam switching timing and the predetermined threshold.

[Technical Effects]

According to the present disclosure, a method and an apparatus of transmitting and receiving a signal based on a spatial parameter may be provided.

According to the present disclosure, a method and an apparatus of determining a spatial parameter based on beam switching timing of a terminal and performing uplink signal transmission or downlink signal reception based on a determined spatial parameter may be provided.

According to the present disclosure, when subcarrier spacing of a target channel/signal and subcarrier spacing of a channel triggering a target channel/signal are different, a method and an apparatus of determining a threshold related to beam switching timing which is a basis for determining a spatial parameter may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a flowchart for describing a beam switching operation of a terminal according to an embodiment of the present disclosure.
FIG. 8 is a diagram for describing beam switching timing of a terminal according to an embodiment of the present disclosure.
FIG. 9 is a flowchart for describing a beam switching operation of other terminal according to an additional embodiment of the present disclosure.
FIG. 10 is a diagram for describing a signaling procedure according to an embodiment of the present disclosure.
FIG. 11 is a diagram which illustrates a block diagram of a wireless communication system according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform

- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

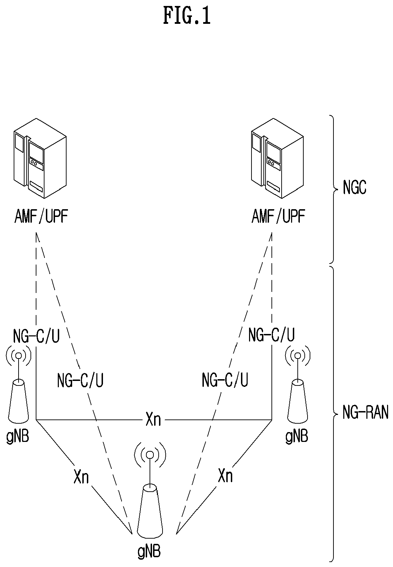

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

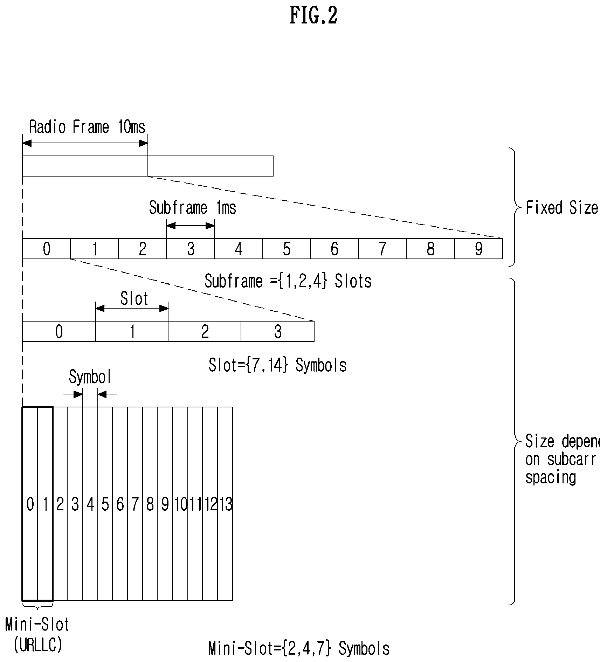

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW) .

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max}N_f/100)\cdot T_c$=10ms. Here, a radio frame is configured with 10 subframes having a duration of $T_{sf}=(\Delta f_{max}N_f/1000)\cdot T_c$=1ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $\mu_s^{\mu}\in\{0,...,N_{slot}^{subframe,\mu}-1\}$ in a subframe and are numbered in an increasing order of $n_{s,f}^{\mu}\in\{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

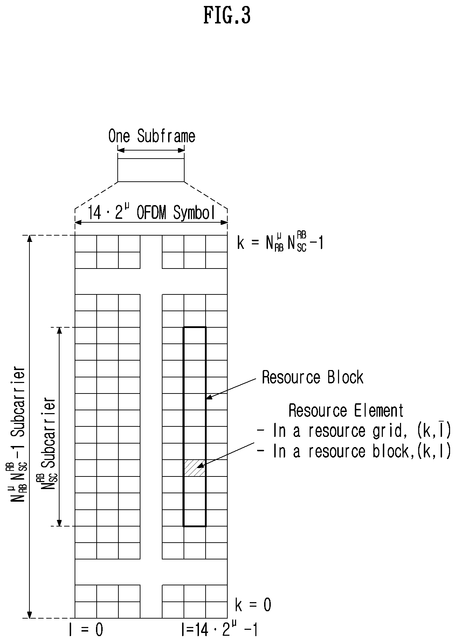

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,u}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu}=n_{PRB}^{\mu}+N_{BWP,i}^{start,\mu}$$

$N_{BWP,i}^{start,\mu}$ is a common resource block that a BWP starts relatively to common resource block 0.

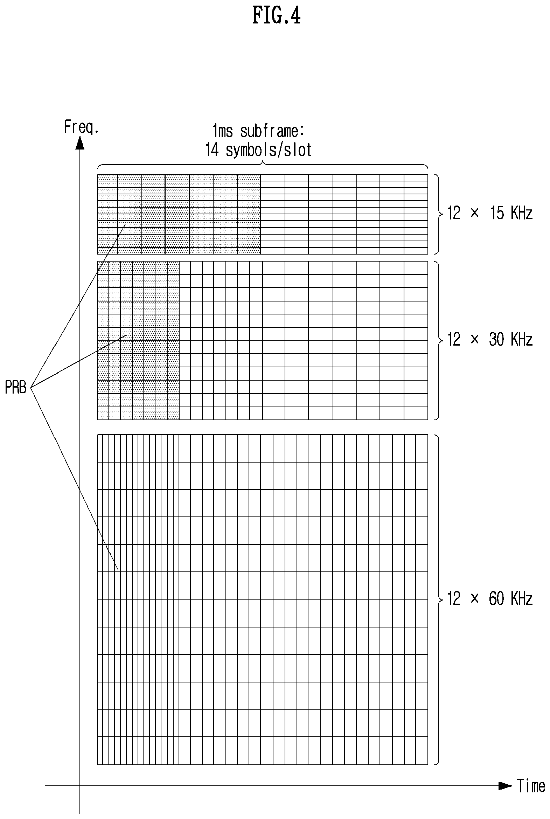

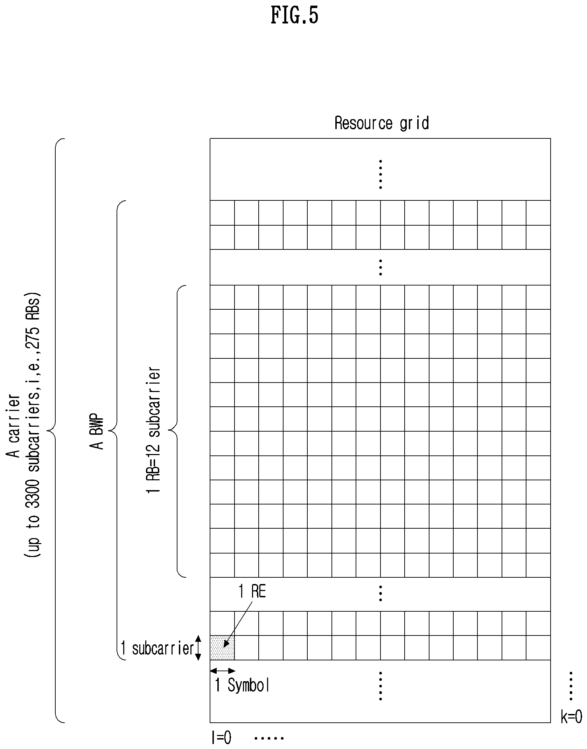

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

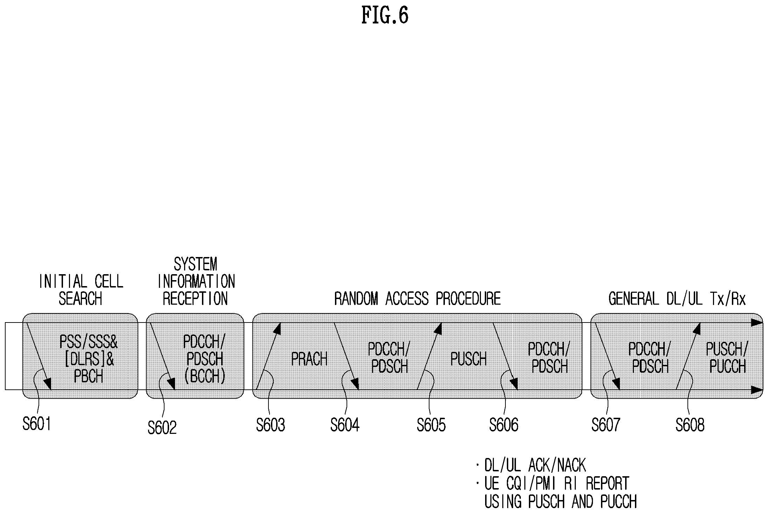

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

beam management (BM)

A BM procedure is L1(layer 1)/L2(layer 2) procedures to obtain and maintain a set of beams of a base station (e.g., a gNB, a TRP, etc.) and/or terminal (e.g., a UE) beams which may be used for downlink(DL) and uplink(UL) transmission/reception, it may include the following procedures and terms.

- Beam measurement: An operation that a base station or a UE measures a property of a received beamformed signal
- Beam determination: An operation that a base station or a UE selects its Tx beam / Rx beam
- Beam sweeping: An operation that a spatial region is covered by using a Tx and/or Rx beam for a certain time interval in a pre-determined method
- Beam report: An operation that a UE reports information of a beamformed signal based on beam measurement

A BM procedure may be classified into (1) a DL BM procedure using a SS(synchronization signal)/PBCH(physical broadcast channel) Block or a CSI-RS and (2) an UL BM procedure using an SRS(sounding reference signal).

In addition, each BM procedure may include Tx beam sweeping for determining a Tx Beam and Rx beam sweeping for determining a Rx beam.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

When HARQ-ACK corresponding to a PDSCH carrying an activation command is transmitted in a slot n, mapping indicated between a TCI state and a codepoint of a DCI field 'Transmission Configuration Indication' may be applied by starting from a slot $n+3N_{slot}^{subframe,\mu}+1$. After UE receives an initial higher layer configuration for TCI states before receiving an activation command, UE may assume for QCL-TypeA, and if applicable, for QCL-TypeD that a DMRS port of a PDSCH of a serving cell is quasi-colocated with a SS/PBCH block determined in an initial access process.

When a higher layer parameter (e.g., tci-PresentInDCI) indicating whether there is a TCI field in DCI configured for UE is set to be enabled for a CORESET scheduling a PDSCH, UE may assume that there is a TCI field in DCI format 1_1 of a PDCCH transmitted in a corresponding CORESET. When tci-PresentInDCI is not configured for a CORESET scheduling a PDSCH or when a PDSCH is scheduled by DCI format 1_0 and a time offset between reception of DL DCI and a corresponding PDSCH is equal to or greater than a predetermined threshold (e.g., timeDurationForQCL), in order to determine a PDSCH antenna port QCL, UE may assume that a TCI state or a QCL assumption for a PDSCH is the same as a TCI state or a QCL assumption applied to a CORESET used for PDCCH transmission. Here, the predetermined threshold may be based on reported UE capability.

When a parameter tci-PresentInDCI is set to be enabled, a TCI field in DCI in a scheduling CC (component carrier) may indicate an activated TCI state of a scheduled CC or a DL BWP. When a PDSCH is scheduled by DCI format 1_1, UE may use a TCI-state according to a value of a 'Transmission Configuration Indication' field of a detected PDCCH having DCI to determine a PDSCH antenna port QCL.

When a time offset between reception of DL DCI and a corresponding PDSCH is equal to or greater than a predetermined threshold (e.g., timeDurationForQCL), UE may assume that a DMRS port of a PDSCH of a serving cell is quasi-colocated with RS(s) in a TCI state for QCL type parameter(s) given by an indicated TCI state.

When a single slot PDSCH is configured for UE, an indicated TCI state may be based on an activated TCI state of a slot having a scheduled PDSCH.

When multiple-slot PDSCHs are configured for UE, an indicated TCI state may be based on an activated TCI state of a first slot having a scheduled PDSCH and UE may expect that activated TCI states across slots having a scheduled PDSCH are the same.

When a CORESET associated with a search space set for cross-carrier scheduling is configured for UE, UE may expect that a tci-PresentInDCI parameter is set to be enabled for a corresponding CORESET. When one or more TCI states are configured for a serving cell scheduled by a search space set including QCL-TypeD, UE may expect that a time offset between reception of a PDCCH detected in the search space set and a corresponding PDSCH is equal to or greater than a predetermined threshold (e.g., timeDurationForQCL).

For both of a case in which a parameter tci-PresentInDCI is set to be enabled and a case in which tci-PresentInDCI is not configured in a RRC connected mode, when a time offset between reception of DL DCI and a corresponding PDSCH is less than a predetermined threshold (e.g., timeDurationForQCL), UE may assume that a DMRS port of a PDSCH of a serving cell is quasi-colocated with RS(s) for QCL parameter(s) used for PDCCH QCL indication of a CORESET associated with a monitored search space having the lowest CORESET-ID in the latest slot where one or more CORESETs in an activated BWP of a serving cell is monitored by UE.

In this case, when QCL-TypeD of a PDSCH DMRS is different from QCL-TypeD of a PDCCH DMRS and they are overlapped in at least one symbol, UE may expect that reception of a PDCCH associated with a corresponding CORESET will be prioritized. It may be also applied to intra-band CA (carrier aggregation) (when a PDSCH and a CORESET exist in a different CC). When any of configured TCI states does not include QCL-TypeD, a different QCL assumption may be obtained from TCI states indicated for a scheduled PDSCH, regardless of a time offset between reception of DL DCI and a corresponding PDSCH.

## Spatial Parameter based Uplink/Downlink Signal Transmission and Reception

Hereinafter, various examples of the present disclosure about a spatial parameter set or candidates of a spatial parameter set configured based on a predetermined threshold and beam switching timing of a terminal are described.

In addition, hereinafter, various examples of the present disclosure that a terminal performs downlink signal reception or uplink signal transmission are described by using a spatial parameter set based on a predetermined threshold and beam switching timing of a terminal.

In a NR system, when a terminal performs reception beamforming, it may report time required for beam change (or beam switching) to a base station (e.g., gNB, eNB, etc.). For example, time required by a terminal from an occasion of receiving DCI including triggering information on an aperiodic (AP) CSI-RS until an occasion of receiving an AP CSI-RS triggered by the DCI may be reported by a terminal to a base station as a parameter, beamSwitchTiming(BST). For example, BST may be reported to a base station by being selected among {14, 28, 48, 224, 336} symbols. In addition, a time domain length of one symbol is different according to SCS, so BST may need a different value per SCS supported by a terminal. Accordingly, a different BST value may be reported for FR and/or SCS and for example, a BST value may be reported for SCS=60kHz and SCS=120kHz corresponding to FR2, respectively.

A BST value is necessary because a terminal may not know which CSI-RS resource is indicated by DCI until completing interpretation of DCI. In more detail, it is because certain time for processing of a terminal is required to apply a beam optimized for reception of a CSI-RS indicated by DCI. In addition, an additional reason why BST is required is that when a terminal is equipped with a plurality of reception panels, it takes time to activate other deactivated panel or switch a panel in order to perform reception of a corresponding CSI-RS after DCI reception and a subsequent operation of CSI-RS reception (e.g., CSI reporting, beam management, time/frequency tracking, etc.). For example, large values like BST={224, 336} may be deemed corresponding to a value that a terminal may report by considering such panel activation/switching delay. Accordingly, a BST value may be configured with the sum of time required for DCI reception and processing and time required for beam switching (e.g., panel activation/switching). For example, a terminal reporting a value of one of BST={14, 28, 48} may be deemed to have no time required for panel activation/switching or ignore it.

A spatial parameter which will be applied by a terminal to downlink reception or uplink transmission may be different based on BST and a predetermined threshold (hereinafter, for convenience of a description, referred to as a BAR value).

For example, when an AP CSI-RS is transmitted before BAR, a terminal may receive a corresponding AP CSI-RS based on a QCL reference RS of other DL RS/channel (e.g., a default CORESET which is a standard for performing buffering or other DL signal/channel transmitted in the same symbol as a corresponding AP CSI-RS), not a QCL reference RS configured for a corresponding AP CSI-RS. Alternatively, when an AP CSI-RS is transmitted after BAR, a corresponding AP CSI-RS may be received based on a QCL reference RS configured for a corresponding AP CSI-RS.

Here, the BAR value may mean a threshold related to an occasion or timing that a CSI/BM related reference signal (e.g., an AP CSI-RS, etc.) is transmitted/received. For example, the BAR value may be a threshold related to a scheduling offset between a last symbol of a PDCCH carrying triggering DCI and a first symbol of an aperiodic CSI-RS resource. A reference signal for a space related (e.g., QCL related) assumption for a CSI/BM related reference signal may be determined/configured based on such a BAR value. A term of a BAR value in the present disclosure may be understood/interpreted according to technical contents described in examples of the present disclosure and does not limit a scope of the present disclosure.

For example, BAR may be configured as a different value according to BST. For example, for one of BST={14, 28, 48}, BAR may be BST and for one of BST={224, 336}, BAR may be 48. Here, a reference threshold may correspond to 48. In other words, for a BST value equal to or less than a reference threshold, a BAR value may be configured to be the same as BST and for a BST value exceeding a reference threshold, a BAR value may be configured to be the same as a reference threshold.

For example, when a terminal which reported a value of one of BST={224, 336} receives a CSI-RS within 48 symbols, a reference threshold, from a DCI reception occasion, based on a default beam which performed buffering (without panel switching), or based on a reception beam corresponding to a TCI state configured for other DL channel/RS overlapped with a corresponding symbol, it may receive a corresponding CSI-RS. When a terminal which reported a value of one of BST={224, 336} receives a CSI-RS within a BST value and after 48 symbols, a reference threshold, from a DCI reception occasion, it may receive an AP CSI-RS according to QCL reference RS information of an indicated CSI-RS (based on a reception beam in a panel which received DCI without panel switching). When a terminal which reported a value of one of BST={224, 336} receives a CSI-RS after a BST value (and after a reference threshold), it may receive an AP CSI-RS according to QCL reference RS information of an indicated CSI-RS (based on a reception beam of a panel which received DCI and other panel).

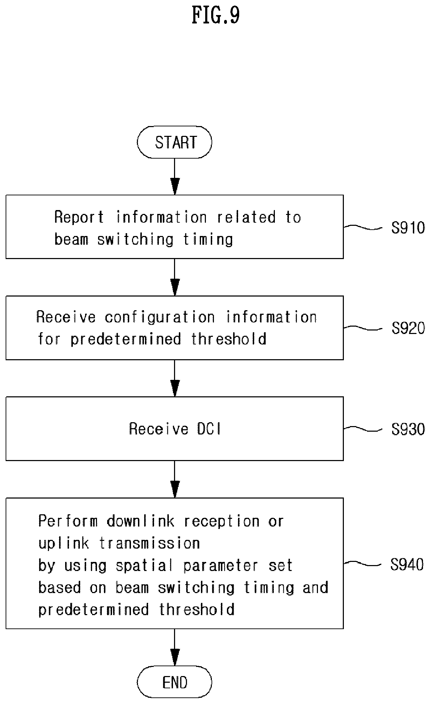

In reference to the after-described example of FIG. 9, when a first reference threshold is configured as 48 symbols, a first spatial parameter set (e.g., a default beam or other overlapped DL channel/RS) may be applied when downlink reception/uplink transmission triggered/scheduled by DCI is performed within a first threshold smaller than 48 symbols and a second spatial parameter set (e.g., a QCL reference RS configured for a corresponding downlink reception/uplink transmission signal/channel) may be applied when downlink reception/uplink transmission triggered/scheduled by DCI is performed after a first reference threshold, 48 symbols.

For example, a spatial parameter set applied to aperiodic CSI-RS reception is described in more detail as follows.

For each aperiodic CSI-RS resource of a CSI-RS resource set associated with each CSI triggering state, through higher layer signaling qcl-info including a list of references for a TCI state for an aperiodic CSI-RS resource associated with a CSI triggering state, UE may receive an indication on a QCL configuration for QCL RS source(s) and QCL type(s). When a state included in the list is configured as a reference for a RS associated with QCL-TypeD, a corresponding RS may be a SS/PBCH block positioned at the same or different CC/DL BWP, or may be a periodically or semi-persistently configured CSI-RS resource positioned at the same or different CC/DL BWP.

Here, when a scheduling offset between a last symbol of a PDCCH carrying triggering DCI and a first symbol of an aperiodic CSI-RS resource of NZP-CSI-RS-ResourceSet configured without a higher layer parameter trs-info is smaller than a predetermined threshold (e.g., beamSwitchTiming) related to beam switching time reported by a UE when the reported value of the threshold is one of {14, 28, 48}, or when the scheduling offset is smaller than 48 when the reported value is one of {224, 336}, an operation may be performed as follows.

If there is other DL signal having a TCI state indicated in the same symbol as a CSI-RS, UE may apply a QCL assumption of the other DL signal even when receiving an aperiodic CSI-RS. The other DL signal may correspond to a PDSCH scheduled with an offset equal to or greater than a timeDurationForQCL threshold, an aperiodic CSI-RS scheduled with an offset equal to or greater than that when a value of a beamSwitchTiming threshold reported by UE is one of {14, 28, 48}, an aperiodic CSI-RS scheduled with an offset equal to or greater than that when a value of a beamSwitchTiming threshold reported by UE is one of {224, 336}, a periodic CSI-RS, a semi-persistent CSI-RS.

If there is no other DL signal having a TCI state indicated in the same symbol as a CSI-RS, when receiving an aperiodic CSI-RS, UE may apply a QCL assumption used for a CORESET associated with a monitored search space having the lowest controlResourceSetId in the latest slot that one or more CORESETs in an activated BWP of a serving cell are monitored.

When a scheduling offset between a last symbol of a PDCCH carrying triggering DCI and a first symbol of an aperiodic CSI-RS resource is equal to or greater than a predetermined threshold (e.g., beamSwitchTiming) related to beam switching time reported by UE when a reported value of the threshold is one of {14, 28, 48}, or when the scheduling offset is equal to or greater than 48 when the reported value is one of {224, 336}, UE may expect to apply a QCL assumption of an indicated TCI state to an aperiodic CSI-RS resource of a CSI triggering state indicated by a CSI trigger field of DCI.

If only one reference threshold (e.g., 48 symbols) is applied to a terminal, a problem may occur that it is hard to apply a valid spatial parameter set according to terminal capability.

For example, in a wireless communication system under study to support a frequency band higher than FR1 and FR2 in Table 2 (e.g., FR3 or FR4), it may be required to support SCS higher than 120kHz. A symbol duration in high SCS (e.g., exceeding 120kHz) is shorter than a symbol duration in SCS of 120kHz. When a terminal supporting such a short symbol duration has capability of BST longer than a reference threshold, 48 symbols, (e.g., 224 or 336 symbols), even when downlink reception or uplink transmission is performed at an occasion after a reference threshold (e.g., 48 symbols) from a DCI detection/reception occasion, a problem may occur that it is difficult to apply a spatial parameter set configured/indicated for corresponding downlink reception/uplink transmission. In other words, despite a length of the same 48 symbols, as SCS gets larger, an absolute time length gets shorter, so a problem may occur that a terminal does not have enough time to receive and process DCI and perform beam switching.

To solve such a problem, the present disclosure describes various examples defining or configuring an additional reference threshold.

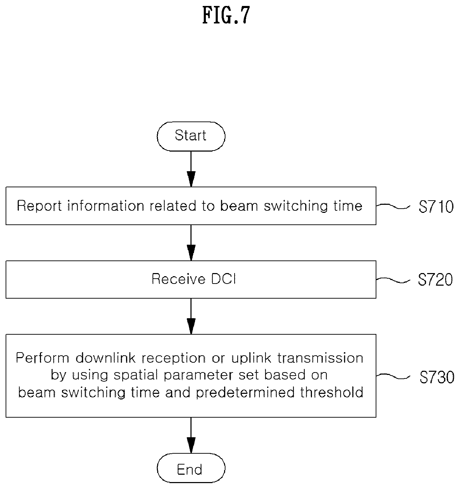

FIG. 7 is a flow chart for describing a beam switching operation of a terminal according to an embodiment of the present disclosure.

In S710, a terminal may report beam switching time related information to a base station.

Beam switching time related information may be pre-transmitted by a terminal to a base station as terminal capability information. As described later, beam switching time may include time required for processing of a terminal from an occasion that a terminal receives DCI until performing downlink signal reception or uplink signal transmission scheduled or triggered by the DCI. Here, time required for processing of a terminal may include time that a terminal processes DCI and prepares downlink signal reception or uplink signal transmission.

In S720, a terminal may receive downlink control information (DCI) from a base station.

DCI may include triggering information or scheduling information on a downlink signal (or channel) to be received by a terminal. Alternatively, DCI may include triggering information or scheduling information on an uplink signal (or channel) to be transmitted by a terminal. For example, DCI may include triggering/scheduling related information on a downlink signal/channel such as aperiodic CSI-RS triggering, PDSCH scheduling, etc. and may include triggering/scheduling related information on an uplink signal/channel such as aperiodic SRS transmission, PUSCH scheduling, etc.

In S730, a terminal may perform downlink signal/channel reception or uplink signal/channel transmission corresponding to the DCI by using a spatial parameter set based on a predetermined threshold and beam switching time.

A downlink or uplink signal/channel corresponding to DCI may include a downlink or uplink signal/channel triggered/scheduled by DCI.

Based on a predetermined threshold and beam switching time, a spatial parameter set used for downlink or uplink signal/channel transmission and reception may be determined among spatial parameter set candidates.

Spatial parameter set candidates may include a first spatial parameter set applied when a downlink reception/uplink transmission occasion is equal to or less then (or below) a predetermined threshold and a second spatial parameter set applied when a downlink reception/uplink transmission occasion exceeds (or is equal to or greater than) a predetermined threshold.

Here, a predetermined threshold may correspond to one threshold among a plurality of threshold candidates. A plurality of threshold candidates may be preconfigured as a different value based on one or more of terminal capability, SCS (Subcarrier Spacing), a FR (Frequency Range) (or a frequency position, or a center frequency position), a CP (Cyclic Prefix) related configuration (e.g., a CP length/type) or may be predetermined between a terminal and a base station without separate signaling.

In other words, unlike providing configuration information on a predetermined threshold of a terminal by a base station in an example of FIG. 9 described later, a predetermined threshold may be determined by a terminal from a candidate value or a predetermined threshold may be predefined in an example of FIG. 7.

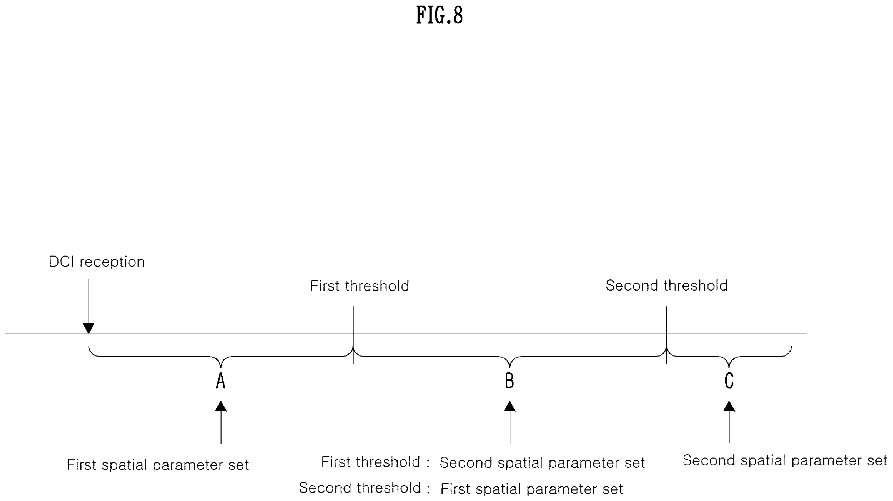

FIG. 8 is a diagram for describing beam switching timing of a terminal according to an embodiment of the present disclosure.

An example of FIG. 8 is just to describe a relative relationship of terminal operation timing related to examples of the present disclosure, and it does not limit an absolute position or size in a time domain.

In an example of FIG. 8, it is described by assuming that a plurality of spatial parameter set candidates include a first and second spatial parameter set, but a scope of the present disclosure is not limited thereto, and even for 3 or more spatial parameter set candidates, examples of the present disclosure may be applied.

In addition, in an example of FIG. 8, it is described by assuming that a plurality of threshold candidates include a first and second threshold, but a scope of the present disclosure is not limited thereto, and even for 3 or more threshold candidates, examples of the present disclosure may be applied.

An example of FIG. 8 represents cases that an occasion when a terminal detects/receives DCI and timing of downlink reception or uplink transmission performed based on corresponding DCI are included in Duration A, B, or C.

In an example of FIG. 8, a first threshold and a second threshold may be defined as a difference (or offset) value with a DCI detection/reception occasion. Duration A may be distinguished as a duration which is equal to or less than (or below) a first threshold from a DCI reception occasion, Duration B may be distinguished as a duration which exceeds (or is equal to or greater than) a first threshold and is equal to or less than (or below) a second threshold and Duration C may be distinguished as a duration which exceeds (or is equal to or greater than) a second threshold.

In addition, a first threshold or a second threshold may be configured based on BST reported by a terminal to a base station in relation to FIG. 7. For example, when a BST value is equal to or less than a first or second reference threshold, a first or second threshold is configured to be the same as a BST value and when a BST value exceeds a first or second reference threshold, a first or second reference threshold is applied as a first or second threshold as it is.

When a first threshold is applied to a terminal, a first spatial parameter set may be applied when downlink reception/uplink transmission triggered/scheduled by DCI belongs to Duration A and a second spatial parameter set may be applied when downlink reception/uplink transmission triggered/scheduled by DCI belongs to Duration B or C. In more detail, in Duration B or C, when downlink reception/uplink transmission is performed within BST, a second spatial parameter set may be applied without beam switching and when downlink reception/uplink transmission is performed after BST, a second spatial parameter set may be applied with beam switching.

When a second threshold is applied to a terminal, a first spatial parameter set may be applied when downlink reception/uplink transmission triggered/scheduled by DCI belongs to Duration A or B and a second spatial parameter set may be applied when downlink reception/uplink transmission triggered/scheduled by DCI belongs to Duration C. In more detail, in Duration C, when downlink reception/uplink transmission is performed within BST, a second spatial parameter set may be applied without beam switching and when downlink reception/uplink transmission is performed after BST, a second spatial parameter set may be applied with beam switching.

Here, a first spatial parameter set may correspond to a default spatial parameter set or a spatial parameter set related to reception of DCI. For example, when a terminal receives DCI and performs downlink reception or uplink transmission triggered/scheduled by corresponding DCI within a first or second threshold, a first spatial parameter set may be applied.

Alternatively, a second spatial parameter set may correspond to a spatial parameter set configured for downlink reception or uplink transmission triggered/scheduled by DCI. For example, when a terminal receives DCI and performs downlink reception or uplink transmission triggered/scheduled by corresponding DCI after a first or second threshold, a second spatial parameter set may be applied.

Here, a spatial parameter set may include QCL information (or a QCL reference RS). For example, for a downlink, a TCI state and for an uplink, spatial relation RS information may be included in a spatial parameter set.

Embodiment 1

This embodiment is about a method of determining or configuring a reference threshold based on a threshold for SCS (e.g., a SCS threshold) and a threshold for BST (e.g., a BST threshold).

For example, when SCS is below (or equal to or less than) a SCS threshold or BST is below (or equal to or less than) a BST threshold, a first threshold may be configured based on a first reference threshold. Alternatively, when SCS is equal to or greater than (or exceeds) a SCS threshold and BST is equal to or greater than (or exceeds) a BST threshold, a second threshold may be configured based on a second reference threshold. Here, a second reference threshold may be greater than a first reference threshold.

For example, a first threshold may be applied based on a first reference threshold (e.g., 48) for a terminal supporting SCS equal to or less than 120kHz, a SCS threshold (regardless of BST). For example, when BST reported by a terminal is equal to or less than 48, a first reference threshold, a first threshold (or first BAR) may be applied in the same way as BST and when BST reported by a terminal exceeds 48, a first reference threshold, a first threshold (or first BAR) may be applied in the same way as 48, a first reference threshold.

For example, a first threshold may be applied based on a first reference threshold (e.g., 48) for a terminal supporting BST equal to or less than 48, a BST threshold (regardless of SCS). For example, when BST reported by a terminal is equal to or less than 48, a first reference threshold, a first threshold (or first BAR) may be applied in the same way as BST.

For example, a second threshold may be applied based on a second reference threshold (e.g., 96) for a terminal supporting SCS exceeding 120kHz, a SCS threshold and supporting BST exceeding 48, a BST threshold. For example, when BST reported by a terminal is equal to or less than 96, a second reference threshold, a second threshold (or second BAR) may be applied in the same way as BST and when BST reported by a terminal exceeds 96, a second reference threshold, a second threshold (or second BAR) may be applied in the same way as 96, a second reference threshold.

For example, for a terminal which reported BST equal to or greater than a specific value for new SCS(>120kHz) (e.g., one of BST={224, 336}), a BAR value higher than 48 may be stipulated. For example, a BAR value applied to a terminal which reported one of BST={224, 336} may be changed according to corresponding SCS. For example, for a terminal which reported BST={224,336}, it may be defined/configured as BAR=48 symbols for SCS={60,120}kHz and it may be defined/configured as BAR=96 symbols for SCS=f240, 480}kHz.

As such, a BAR value (e.g., a BAR value, a threshold which is a standard for determining a spatial parameter set applied to AP CSI-RS reception) may be configured/defined based on (or by considering) SCS and BST.

224 or 336 as a BST value in the above-described example is just an example, and it does not limit a scope of the present disclosure. In addition, as new SCS is supported in the present disclosure, new BST candidate values (e.g., 96, 448, etc.) may be additionally defined and in this case, a BST threshold may be defined as a value larger than 48 without being limited to 48. In addition, a second threshold according to a second reference threshold may be applied to all or part of BST candidate value(s) larger than a second reference threshold (e.g., a BAR value defined to support new SCS (e.g., 96, a second reference threshold)).

Embodiment 2

This embodiment is about a method that one or more of a reference threshold candidate, a BST candidate value, or a BST set is defined/configured based on SCS and/or terminal capability.

According to embodiment 1, a first or second reference threshold which will be applied to a terminal reporting a BST value equal to or greater than a BST threshold may by defined as a specific value (or a fixed value) according to SCS. But, time required until DCI decoding is completed (without performing beam/channel switching) may be different per terminal. For example, despite BST=336 in SCS=480kHz, some terminals may complete DCI decoding in the same beam/panel as DCI reception beam/panel within 48 symbols, while other terminals may complete it within 96 symbols. In this case, a terminal that a higher threshold (or BAR value) is required is generally UE having low performance (or low end) and may select and report one of higher BST values and a terminal that a lower threshold (or BAR value) is required is generally UE having high performance (or high end or advanced) and may select and report one of lower BST values. Considering it, a reference threshold may be configured/defined based on capability of a terminal and/or SCS supported by a terminal.

For example, a threshold (or a BAR value) applied to specific SCS according to a terminal may be configured/defined differently. Additionally or alternatively, a configuration/a scope of BST candidate values may be differently configured/defined according to a threshold (or a BAR value). Additionally or alternatively, a plurality of BST sets with a different scope or configuration of BST candidate values may be configured/defined for specific SCS. Additionally or alternatively, a threshold (or a BAR value) may be differently configured/defined per BST set. A threshold (or a BAR value) applied according to a terminal may be configured/defined as a different value based on one or more of capability, a type or a category of a terminal or a configuration/an indication of a base station.

For example, a plurality of BST sets may be configured/defined as a different combination of BST candidates. For example, a different BST set may have a different scope of BST candidates, may have different granularity of BST candidates, may have the same or different number of BST candidates and some BST candidate(s) may be overlapped. For example, a first BST set may be {14, 28, 48, 224, 336} and a second BST set may be {28, 56, 96, 336, 448}.

For example, a corresponding threshold (or BAR value) may be differently configured/defined per BST set. For example, a reference threshold for a first BST set may be 48 symbols and a reference threshold for a second BST set may be 96 symbols.

A terminal may report to a base station information on which set of a plurality of BST sets will be selected/applied and information on which BST value in a corresponding set will be selected/applied.

As an additional example, according to a type/a category of a terminal, which threshold (or BAR value) and/or BST set will be applied may be configured/defined. For example, a BST set and/or a BAR value which will be applied to MTC, IoT, a vehicle terminal may be configured/defined differently from a BST set and/or BAR value which will be applied to an eMBB terminal like a handset.

Embodiment 3

This embodiment is about a method of differently configuring/defining a threshold (or a BAR value) based on a CP related configuration. For example, based on whether to apply an extended CP (ECP) and/or a CP length, a threshold (or a BAR value) may be configured/defined.

As an interval between samples gets shorter when new SCS (e.g., SCS larger than the existing SCS) is applied, a normal CP length may not cover the maximum delay spread according to a communication environment, so an ECP based waveform generation method may be applied. As a symbol duration is different according to a CP type/length, a threshold (or a BAR value) which is related to DCI processing and beam switching of a terminal and is a standard for applying a spatial parameter set may be applied based on a CP type/length.

When a threshold (or a BAR value) is configured/defined by considering or based on a CP type or length, a threshold (or a BAR value) applied to a CP with a first type/length may be the same as or different from a threshold (or a BAR value) applied to a CP with a second type/length. In a different case, a threshold (or a BAR value) applied to a CP with a first type/length may be greater than a threshold (or a BAR value) applied to a CP with a second type/length. For example, an ECP supports a symbol duration longer than a normal CP, so a threshold (or a BAR value) applied to an ECP may be configured/defined as a value which is smaller/lower than a threshold (or a BAR value) applied to a normal CP.

The above-described embodiments may be applied independently or may be entirely or partially combined and applied.

In addition, the above-described embodiments described a reference threshold (or BAR value) which determines a QCL reference RS when receiving an AP CSI-RS as a main example, but a scope of the present disclosure is not limited thereto. For example, examples of the present disclosure may be also applied to a threshold which determines a spatial parameter set which will be applied to downlink transmission and/or uplink transmission related to time required for beam switching of a terminal.

For example, in applying a different QCL assumption for a PDSCH/a DMRS by comparing time from DCI reception to a PDSCH reception occasion with a predetermined threshold (e.g., a value of timeDurationForQCL), a reference threshold for the predetermined threshold may be applied as one of a plurality of candidate values. For example, when a capability value reported by a terminal exceeds a reference threshold, the reference threshold may be applied as the predetermined threshold. Alternatively, when a capability value reported by a terminal is equal to or less than a reference threshold, the capability value may be applied as the predetermined threshold. Candidates of the reference threshold may be configured/defined differently based on one or more of SCS, a FR (or a frequency position, or a center frequency position), terminal capability, or a CP related configuration (e.g., a CP length/type).

As an additional example, in determining a spatial relation RS which will be applied to AP SRS transmission, or in determining a spatial relation RS which will be applied to PUSCH transmission, a different spatial relation RS may be applied based on a predetermined threshold and here, a reference threshold for the predetermined threshold may be applied as one of a plurality of candidate values. For example, when a capability value reported by a terminal exceeds a reference threshold, the reference threshold may be applied as the predetermined threshold. Alternatively, when a capability value reported by a terminal is equal to or less than a reference threshold, the capability value may be applied as the predetermined threshold. Candidates of the reference threshold may be configured/defined differently based on one or more of SCS, a FR (or a frequency position, or a center frequency position), capital capability, or a CP related configuration (e.g., a CP length/type.

Embodiment 4

For the above-described embodiments, an additional beam switching timing delay (BST delay) value may be applied to a threshold (or a BAR value). An additional BST delay value is referred to as a "D" value for convenience. For example, a D value may be applied when a SCS value of a target channel/signal (or SCS configuration parameter $\mu$) and a SCS value (or SCS configuration parameter $\mu$) of a channel/information triggering the target channel/signal are different. For example, when a SCS value of a PDCCH/DCI and a SCS value of a PDSCH or an AP CSI-RS triggered by the PDCCH/DCI are different, a D value may be added to a threshold (or a BAR value).

For example, as in the above-described examples, a spatial parameter to be applied by a terminal may be determined according to whether a scheduling offset between a last symbol of a PDCCH carrying triggering DCI and a first symbol of an aperiodic CSI-RS resource is below (or equal to or less than) a predetermined threshold or is equal to or greater than (or exceeds) a predetermined threshold. Here, at least one of the predetermined threshold or beam switching timing reported by a terminal may be determined based on SCS, etc. For example, when SCS exceeds 120kHz (e.g., when a SCS configuration parameter $\mu$ exceeds 3), beam switching timing larger than {14, 28, 48} (e.g., 96, etc.) may be reported and a predetermined threshold larger than 48 (e.g., 96, etc.) may be applied. Here, when SCS (or $\mu_{PDCCH}$) of a PDCCH and SCS (or $\mu_{CSIRS}$) of a CSI-RS are different, a value obtained by adding a D value (e.g., $D = d * 2^{\mu_{CSIRS}}/2^{\mu_{PDCCH}}$) to the predetermined threshold may be applied as a threshold.

For example, a d value may be predefined as the number of PDCCH symbols determined according to $\mu_{PDCCH}$ (or SCS of a PDCCH). For example, a d value may be defined as having a value of 8 when $\mu_{PDCCH}$ is 0 or 1, having a value of 14 when $\mu_{PDCCH}$ is 2, having a value of 28 when $\mu_{PDCCH}$ is 3, having a value of 56 or 112 when $\mu_{PDCCH}$ is 5 and others.

For example, when SCS of a PDCCH and SCS of an AP CSI-RS are different, a D value may be added to at least one of a BST value reported by a terminal or a BAR value determined by a BST value. In other words, at least one of BST+D or BAR+D may be used as a threshold (or BAR) for which spatial parameter (e.g., a TCI state, a QCL reference RS, etc.) will be applied. Here, D may be $d*2^{\mu CSIRS}/2^{\mu PDCCH}$, may be a value which varies according to SCS of a PDCCH and SCS of a CSI-RS, and may have a characteristic that absolute time according to a CSI-RS SCS change is fixed as it increases in direct proportion to SCS of a CSI-RS.

According to the present disclosure, for SCS higher than a predetermined standard (e.g., 480kHz, 960kHz), a D value may be applied to BST and/or BAR. For BST and/or BAR based on at least one of SCS, a frequency position, a terminal capability, or a CP-related configuration described in the above-described embodiment 1/2/3 and its sub-embodiments, a D value may be additionally applied.

For example, for SCS higher than a predetermined standard in Embodiment 1 (e.g., exceeding 120kHz, e.g., 240, 480, 960kHz, etc.), X, a new BAR value, instead of 48, the existing BAR value, (here, X is a value larger than 48, e.g., 96) may be applied. Here, when SCS of a CSI-RS and SCS of a PDCCH are different, instead of $48+d*2^{\mu CSIRS}/2^{\mu PDCCH}$, the existing BAR value, $X+d*2^{\mu CSIRS}/2^{\mu PDCCH}$ may be applied as a BAR value.

For example, when PDCCH SCS and CSI-RS SCS are different, a new BAR value (e.g., X+D) may be applied based on SCS of a target channel/signal (e.g., a CSI-RS).

Additionally or alternatively, when even one of PDCCH SCS and CSI-RS SCS corresponds to new SCS (or SCS exceeding 120, e.g., 480, 960 kHz, etc.), a new BAR value (e.g., X+D) may be applied.

Additionally or alternatively, when $48+d*2^{\mu CSIRS}/2^{\mu PDCCH}$ is applied in the same way as the existing BAR value, but even one of PDCCH SCS and CSI-RS SCS corresponds to new SCS (or SCS exceeding 120, e.g., 480, 960 kHz, etc.), a non-zero d value (i.e., exceeding 0) may be applied although PDCCH SCS and CSI-RS SCS are the same. In this case, for a non-zero d value, a d value (e.g., d=56) when CSI-RS SCS is greater than PDCCH SCS may be defined as a value larger than a d value (e.g., d=48) when PDCCH SCS and CSI-RS SCS are the same.

According to this embodiment, in applying new BST/BAR based on SCS, etc. according to the above-described embodiment 1,2,3 and its sub-embodiments, when SCS of a target channel/signal (e.g., a CSI-RS/a PDSCH) and SCS of a channel triggering a corresponding target channel/signal (e.g., a PDCCH) are different, which standard is used to apply new BST/BAR may be clearly defined. Whether new BST/BAR is applied may be determined based on SCS of a target channel/signal or may be determined based on whether even one of SCS of a target channel/signal and SCS of a trigger channel corresponds to new SCS (e.g., exceeding 120kHz, e.g., 240, 480, 960kHz, etc.).

Additionally, when a terminal reports a BST value, a spatial parameter-related operation of a terminal related to a BAR value, etc. may be determined based on a corresponding BST value. For example, whether a default spatial parameter assumption (e.g., a spatial parameter related to PDCCH/DCI reception (or configured for a CORESET)) will be applied or whether a spatial parameter value for a target channel/signal will be applied may be determined according to a threshold determined by a BST value. For example, whether a default spatial parameter assumption will be applied or whether a spatial parameter value indicated in DCI will be applied may be determined according to a threshold determined by a BST value. Accordingly, complexity of a terminal operation including a terminal itself defining/applying a rule for determining a BAR value, etc. is increased according to a BST value reported by a terminal. In order to reduce such complexity, in the present disclosure, a method in which a base station indicates/configures to a terminal a threshold which will be applied to a corresponding terminal after a base station determines a threshold by referring to a BST value of a terminal is described below.

Embodiment 5

According to this embodiment, a base station may provide a terminal with information on a threshold (hereinafter, B_TH) determining a spatial parameter-related operation in association with a BST value reported by a terminal.

For example, whether a terminal will apply a default spatial parameter assumption or apply a spatial parameter of a target channel/signal (e.g., a PDSCH/a CSI-RS) may be determined according to an indicated B_TH value.

For example, whether a terminal will apply a default spatial parameter assumption or apply a spatial parameter indicated in DCI may be determined according to an indicated B_TH value.

In the above-described examples, when a BST value reported by a terminal is equal to or less than a specific value (e.g., 14, 28, 48), a problem that a terminal does not have enough time to switch a beam may occur if a B_TH value provided/configured by a base station is smaller than a BST value. Accordingly, a terminal does not expect that a B_TH value provided/configured by a base station is smaller than a BST value reported by a terminal (or expects that a B_TH value is indicated/configured to be the same as a BST value; or expects that a B_TH value is indicated/configured to be equal to or greater than a BST value). If SCS of a target channel/signal is greater than SCS of a trigger channel, a B_TH value may be indicated/configured to be smaller than a BST value. In other words, when SCS of a target channel/signal is not greater than (i.e., the same as or smaller than) SCS of a trigger channel, a terminal does not expect that a B_TH value is smaller than a BST value (or expects that a B_TH value is indicated/configured to be the same as a BST value; or expects that a B_TH value is indicated/configured to be equal to or greater than a BST value).

Additionally or alternatively, when a BST value reported by a terminal is equal to or greater than a specific value (e.g., 224, 448), this value may be a value considering even a channel switching delay. Accordingly, a BAR value is defined/calculated as 48, 48+D, 96, 96+D and a terminal does not expect that a B_TH value is smaller than the BAR value (or expects that a B_TH value is indicated/configured to be the same as a BAR value; or expects that a B_TH value is indicated/configured to be equal to or greater than a BAR value).

For example, a B_TH value indicated/configured by a base station may be configured/designated based on a case in which SCS of a target channel/signal (e.g., a PDSCH/a CSI-RS) is the same as SCS of a channel triggering a corresponding target channel/signal (e.g., a PDCCH). When SCS of a target channel/signal is different from SCS of a trigger channel, or when SCS of a target channel/signal is greater than SCS of a trigger channel, a predetermined delay value may be added to a B_TH value. Here, a predetermined delay value may correspond to a D value described in Embodiment 4. In other words, a base station may indicate/configure a B_TH value and a terminal may apply indicated/configured B_TH as it is or may apply B_TH+D.

Additionally or alternatively, a base station may configure a B_TH value which will be applied per SCS of a target channel/signal, respectively. In this case, a D value may be applied according to SCS of a trigger channel. In other words, when SCS of a trigger channel is different from (or smaller than) SCS of a target channel/signal, D may be added to a B_TH value indicated by a base station.

Additionally or alternatively, a base station may configure a B_TH value which will be applied per SCS of a trigger channel, respectively. In this case, a D value may be applied according to SCS of a target channel/signal. In other words, when SCS of a target channel/signal is different from (or greater than) SCS of a trigger channel, D may be added to a B_TH value indicated by a base station.

Additionally or alternatively, a base station may configure a B_TH value which will be applied per combination of SCS of a trigger channel and SCS of a target channel/signal, respectively. In this case, since a base station indicates/configures a B_TH value by already reflecting D which is applied when SCS of a trigger channel is different from SCS of a target channel/signal, a terminal may apply B_TH indicated/configured by a base station as it is.

In the above-described examples of the present disclosure, a case in which a BST value to which a BAR value is applied is reported, or a case in which a BST value equal to or greater than a specific value (considering a panel switching delay) (e.g., 224, 448) is reported may refer to a case in which a separate terminal capability value (e.g., beamSwitchTiming-r_xxx, here, xxx is an arbitrary release number after release 16) having only corresponding values as a candidate value is reported or a case in which a corresponding operation is enabled by a base station configuration (e.g., enableBeamSwitchTiming-r_xxx) (based on corresponding terminal capability reporting).

In the above-described examples, a threshold (e.g., B_TH) configured/indicated by a base station and an additional beam switching timing delay (e.g., D) are described by assuming a case in which a target channel/signal is an AP CSI-RS/a PDSCH, but a scope of the present disclosure is not limited thereto, and a target channel/signal triggered/scheduled by a trigger channel (e.g., a PDCCH) may include aperiodic SRS transmission, PUSCH transmission, etc.

FIG. 9 is a flowchart for describing a beam switching operation of other terminal according to an additional embodiment of the present disclosure.

In S910, a terminal may report beam switching timing related information to a base station. S910 corresponds to S710 of FIG. 7, so an overlapping description is omitted.

In S920, a terminal may receive configuration information on a predetermined threshold from a base station.

A predetermined threshold is a threshold related to a determination of a spatial parameter of a terminal and may correspond to BAR or B_TH in the above-described examples. For example, configuration information may include a threshold for beam switching timing (BST) reported by a terminal. For example, a threshold for BST may have a value equal to or greater than BST reported by a terminal in S910.

In S930, a terminal may receive DCI triggering/scheduling downlink reception or uplink transmission through a specific channel (e.g., a PDCCH). S930 corresponds to S720 of FIG. 7, so an overlapping description is omitted.

In S940, a terminal may perform downlink reception or uplink transmission triggered/scheduled by the DCI by using a spatial parameter set based on beam switching timing and a predetermined threshold (i.e., a threshold determined based on configuration information received in S920).

Similar to a description regarding S730 of FIG. 7, downlink reception in S940 may include at least one of AP CSI-RS reception or PDSCH reception and uplink transmission may include at least one of AP SRS transmission or PUSCH transmission. In addition, a first spatial parameter set may be applied when an occasion of downlink reception or uplink transmission is before a predetermined threshold from a DCI reception occasion and a second spatial parameter set may be applied when it is after a predetermined threshold. A first spatial parameter set may include a spatial parameter related to DCI reception and a second spatial parameter set may include a spatial parameter configured for downlink reception or uplink transmission.

Basically, in S940, beam switching timing and/or a predetermined threshold may belong to a set of first candidate values equal to or less than predetermined SCS (e.g., 120kHz, or $\mu$=3), or a set of second candidate values exceeding predetermined SCS. For example, new BST (e.g., 28, 56, 96, etc.) or a threshold (e.g., 48, 96, etc.) may be applied to the above-described high SCS (e.g., 240, 480, 960kHz) (i.e., a set of second candidate values) and the existing BST (e.g., 14, 28, 48) or the existing threshold (e.g., 48) may be applied to low SCS (e.g., 15, 30, 60, 120kHz) (i.e., a set of second candidate values).

Additionally, when first SCS of a channel carrying DCI is different from second SCS for downlink reception or uplink transmission triggered or scheduled by DCI, a predetermined threshold may include a predetermined delay value (e.g., D). Here, a predetermined delay value may be calculated based on the number of symbols predefined based on the first SCS (or $\mu_{PDCCH}$) (e.g., d) and a ratio of the second SCS for the first SCS (e.g., $2^{\mu CSIRS}/2^{\mu PDCCH}$).

Configuration information provided for a terminal in S920 may include a threshold based on an assumption that first SCS is the same as second SCS. When first SCS is different from second SCS, a terminal may derive a predetermined threshold applied in S940 by adding a predetermined delay value (i.e., D) to a threshold included in configuration information. As an additional example, the configuration information may include a threshold for each candidate of second SCS, include a threshold for each candidate of first SCS, or include a threshold for each candidate of combinations of first SCS and the second SCS.

Other operation related to S940 corresponds to S730 of FIG. 7, so an overlapping description is omitted.

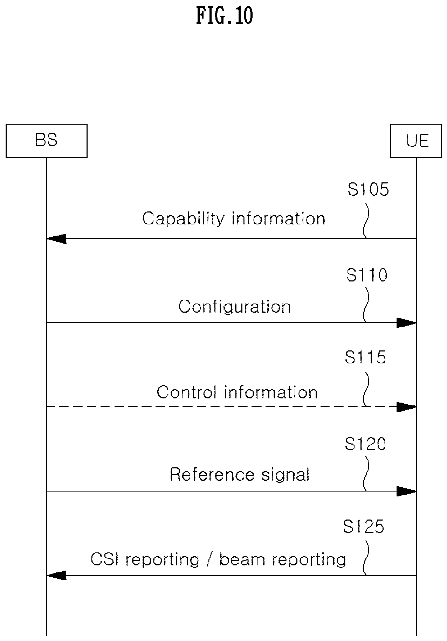

FIG. 10 is a diagram for describing a signaling process according to an embodiment of the present disclosure.

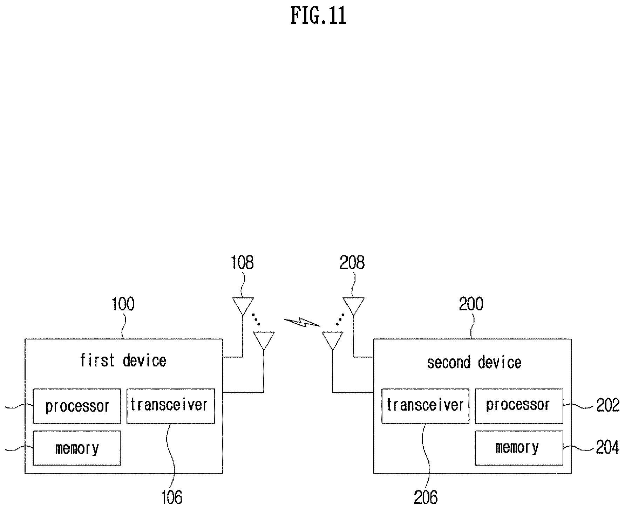

An example of a signaling operation of a base station and a terminal for the above-described embodiments may be as in FIG. 10. Here, a terminal/a base station is just an example, and may be applied by being substituted with a variety of devices as described in FIG. 11. As FIG. 10 is for convenience of a description, it does not limit a scope of the present disclosure. In addition, some of steps described in FIG. 10 may be merged or omitted. In addition, a CSI related operation or a beam management operation is assumed in performing procedures described below, but a scope of the present disclosure is not limited thereto, and it may be applied to a variety of downlink reception or uplink transmission operations.

A terminal may transmit capability information to a base station S105. In other words, a base station may receive capability information from UE. For example, the capability information may include beam management/CSI related information, information on a terminal (e.g., a terminal category, etc.), etc. For example, as in the above-described embodiments, the capability information may include time information (e.g., BST, etc.) related to beam activation/change which may be supported by a terminal. In an example, as in embodiment 2, when a plurality of sets of BST candidate values are configured, indication/selection information on a set supported by a terminal among the plurality of sets may be included in the capability information. The operation in S105 may be omitted in some cases.

For example, the above-described operation in S105 that a terminal (100/200 in FIG. 11) transmits the capability information to a base station (200/100 in FIG. 11) may be implemented by a device in FIG. 11 which will be described below. For example, in reference to FIG. 11, one or more processors 102 may control one or more transceivers 106 and/or one or more memories 104, etc. to transmit the capability information and one or more transceivers 106 may transmit capability information to a base station.

A terminal may receive configuration information from a base station S110. In other words, a base station may transmit a configuration to UE. The configuration may include one or more of system information (SI), scheduling information, a BM (Beam management) related configuration (e.g., DL BM related CSI-ResourceConfig IE, NZP CSI-RS resource set IE, etc.), a CSI related configuration. For example, the configuration may include beam configuration information (e.g., spatial relation assumption information) of a reference signal for CSI/BM. In an example, the beam configuration information may include reference signal related information for a QCL relationship. The configuration may be transmitted through higher layer (e.g., RRC or MAC CE) signaling. In addition, when the configuration information is predefined or preconfigured, a corresponding step may be omitted.

For example, as in Embodiment 5, the configuration may include a value (e.g., B_TH) which is a basis for deriving a predetermined threshold which will be applied by a terminal to a determination of a spatial parameter. A terminal may use a B_TH value as it is or may calculate a predetermined threshold which will be applied to a spatial parameter determination derived from B_TH (e.g., by adding a predetermined delay value (e.g., D) to B_TH).

For example, the above-described operation in S110 that a terminal (100/200 in FIG. 11) receives the configuration from a base station (200/100 in FIG. 118) may be implemented by a device in FIG. 11 which will be described below. For example, in reference to FIG. 118, one or more processors 102 may control one or more transceivers 106 and/or one or more memories 104, etc. to receive the configuration and one or more transceivers 106 may receive the configuration from a base station.

A terminal may receive control information from a base station S115. In other words, a base station may transmit control information to UE. For example, the control information may be DCI and may be received through a PDCCH. For example, the control information may include information triggering aperiodic CSI reporting (e.g., including beam related reporting). In some cases, S115 may be omitted.

For example, the above-described operation in S115 that a terminal (100/200 in FIG. 11) receives the control information from a base station (200/100 in FIG. 11) may be implemented by a device in FIG. 11 which will be described below. For example, in reference to FIG. 11, one or more processors 102 may control one or more transceivers 106 and/or one or more memories 104, etc. to receive the control information and one or more transceivers 106 may receive the control information from a base station.

A terminal may receive a reference signal (e.g., a CSI-RS) from a base station S120. The reference signal may be related to channel state reporting/beam reporting. For example, the reference signal may be received based on the beam configuration information. For example, the reference signal may be received by applying a spatial relation assumption (e.g., a QCL relationship) based on the above-described embodiments. For example, the spatial relation assumption may be differently applied based on the above-described information triggering aperiodic CSI reporting and a timing offset that the reference signal is received. With this regard, a specific threshold (e.g., a BAR value in the above-described embodiments) may be configured/defined based on the above-described embodiments. For example, a specific threshold (or a BAR value) may be configured/defined based on BST transmitted through SCS and capability information. For example, a specific threshold (or a BAR value) may be configured/defined differently according to a terminal (e.g., a type/a category of a terminal). For example, a specific threshold (or a BAR value) may be configured/defined differently per set of BST candidate values. For example, a specific threshold (or a BAR value) may be configured/defined based on (or by considering) a CP length. For example, when the time offset is within the specific threshold, the reference signal may be received by applying a spatial relation assumption (e.g., a QCL relationship) of other RS or CORESET. For example, when the timing offset is equal to or greater than (or exceeds) the specific threshold value, the reference signal may be received by applying a spatial relation assumption (e.g., a QCL relationship) configured for a corresponding reference signal. For example, the specific threshold value may be configured/defined as one of a plurality of candidate values. For example, a plurality of candidates of the specific threshold value may include a first threshold value (e.g., a value equal to or less than 48) and a second threshold value (e.g., a value larger than 48).

For example, the above-described operation in S120 that a terminal (100/200 in FIG. 11) receives the reference signal from a base station (200/100 in FIG. 11) may be implemented by a device in FIG. 11 which will be described below. For example, in reference to FIG. 18, one or more processors 102 may control one or more transceivers 106 and/or one or more memories 104, etc. to receive the reference signal and one or more transceivers 106 may receive the reference signal from a base station.

A terminal may perform CSI measurement/beam related measurement based on a received reference signal and perform CSI reporting/beam reporting to a base station S125. For example, the above-described beam management operation / CSI related operation may be applied to perform CSI reporting/beam reporting.

For example, the above-described operation in S125 that a terminal (100/200 in FIG. 11) performs the CSI reporting/beam reporting to a base station (200/100 in FIG. 11) may be implemented by a device in FIG. 11 which will be described below. For example, in reference to FIG. 11, one or more processors 102 may control one or more transceivers 106 and/or one or more memories 104, etc. to perform the CSI reporting/beam reporting and one or more transceivers 106 may perform the CSI reporting/beam reporting to a base station.

As described above, the above-described base station/terminal operation (e.g., embodiment 1, 2, 3, 4, 5, an example of FIG. 8, FIG. 9, FIG. 10, FIG. 11, etc.) may be implemented by a device (e.g., 100/200 in FIG. 11) which will be described below. For example, a terminal may correspond to a first wireless device and a base station may correspond to a second wireless device and in some cases, the opposite may be considered.

For example, the above-described base station/terminal operation (e.g., embodiment 1, 2, 3, 4, 5, an example of FIG. 8, FIG. 9, FIG. 10, FIG. 11, etc.) may be processed by one or more processors in FIG. 11 (e.g., 102, 202) and the above-described base station/terminal operation (e.g., embodiment 1, 2, 3, 4, 5, an example of FIG. 8, FIG. 9, FIG. 10, FIG. 11, etc.) may be stored in a memory (e.g., one or more memories in FIG. 11 (104, 204)) in a form of a command/a program (e.g., an instruction, an executable code) for driving at least one processor in FIG. 11 (e.g., 102, 202) .

General Device to which the Present Disclosure may be applied

FIG. 11 is a diagram which illustrates a block diagram of a wireless communication system according to an embodiment of the present disclosure.

In reference to FIG. 11, a first device/wireless device 100 and a second device/wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat S1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of performing downlink reception or uplink transmission by a terminal in a wireless communication system, the method comprising:

   transmitting to a base station information related to beam switching timing of the terminal;
   receiving configuration information for a predetermined threshold from the base station;
   receiving downlink control information (DCI) including information for the downlink reception or the uplink transmission from the base station; and
   performing the downlink reception or the uplink transmission by applying one spatial parameter set among a plurality of spatial parameter sets based on the beam switching timing and the predetermined threshold.

2. The method of claim 1, wherein:
   the configuration information includes a threshold for the beam switching timing.

3. The method of claim 1, wherein:
   based on first SCS of a channel carrying the DCI being different from second SCS for the downlink reception or the uplink transmission triggered or scheduled by the DCI, the predetermined threshold includes a predetermined delay value.

4. The method of claim 2, wherein:
   the predetermined delay value is calculated based on a number of symbols predefined based on the first SCS and a ratio of the second SCS for the first SCS.

5. The method of claim 2, wherein:
   the configuration information includes the threshold based on an assumption that first SCS of a channel carrying the DCI is the same as second SCS for the downlink reception or the uplink transmission triggered or scheduled by the DCI.

6. The method of claim 2, wherein the configuration information:

   includes the threshold for each candidate of the second SCS,
   includes the threshold for each candidate of the first SCS, or
   includes the threshold for each candidate of combinations of the first SCS and the second SCS.

7. The method of claim 2, wherein:
   at least one of the beam switching timing or the predetermined threshold belongs to a set of first candidate values equal to or less than predetermined SCS or the set of second candidate values exceeding the predetermined SCS.

8. The method of claim 1, wherein:

   a first spatial parameter set is applied based on an occasion of the downlink reception or the uplink transmission being before the predetermined threshold from the DCI reception occasion,
   a second spatial parameter set is applied based on the occasion of the downlink reception or the uplink transmission being after the predetermined threshold from the DCI reception occasion.

9. The method of claim 8, wherein:

the first spatial parameter set includes a spatial parameter related to the DCI reception,
the second spatial parameter set includes the spatial parameter configured for the downlink reception or the uplink transmission.

10. The method of claim 1, wherein:

the downlink reception includes at least one of channel state information-reference signal (CSI-RS) reception or physical downlink shared channel (PDSCH) reception,
the uplink transmission includes at least one of sounding reference signal (SRS) transmission or physical uplink shared channel (PUSCH) transmission.

11. A terminal for performing downlink reception or uplink transmission in a wireless communication system, the terminal comprising:

at least one transceiver; and
at least one processor connected to the at least one transceiver,
wherein the at least one processor is configured to:

transmit to a base station information related to beam switching timing of the terminal through the at least one transceiver;
receive configuration information for a predetermined threshold from the base station through the at least one transceiver;
receive downlink control information (DCI) including information for the downlink reception or the uplink transmission from the base station through the at least one transceiver; and
perform the downlink reception or the uplink transmission by applying one spatial parameter set among a plurality of spatial parameter sets based on the beam switching timing and the predetermined threshold through the at least one transceiver.

12. A method of performing downlink transmission or uplink reception by a base station in a wireless communication system, the method comprising:

receiving information related to beam switching timing of a terminal from the terminal;
transmitting to the terminal configuration information for a predetermined threshold;
transmitting to the terminal downlink control information (DCI) including information for the downlink transmission or the uplink reception; and
performing the downlink transmission or the uplink reception by applying one spatial parameter set among a plurality of spatial parameter sets based on the beam switching timing and the predetermined threshold.

13. A base station for performing downlink transmission or uplink reception in a wireless communication system, the base station comprising:

at least one transceiver; and
at least one processor connected to the at least one transceiver,
wherein the at least one processor is configured to:

receive information related to beam switching timing of a terminal from the terminal through the at least one transceiver;
transmit to the terminal configuration information for a predetermined threshold through the at least one transceiver;
transmit to the terminal downlink control information (DCI) including information for the downlink transmission or the uplink reception through the at least one transceiver; and
perform the downlink transmission or the uplink reception by applying one spatial parameter set among a plurality of spatial parameter sets based on the beam switching timing and the predetermined threshold.

14. A processing unit configured to control a terminal performing downlink reception or uplink transmission in a wireless communication system, the processing unit comprising:

at least one processor; and

at least one computer memory which is operably connected to the at least one processor and stores instructions performing operations based on being executed by the at least one processor,
wherein the operations include:

transmitting to a base station information related to beam switching timing of the terminal;
receiving configuration information for a predetermined threshold from the base station;
receiving downlink control information (DCI) including information for the downlink reception or the uplink transmission from the base station; and
performing the downlink reception or the uplink transmission by applying one spatial parameter set among a plurality of spatial parameter sets based on the beam switching timing and the predetermined threshold.

15. At least one non-transitory computer readable medium storing at least one instruction, wherein:
the at least one instruction controls a device which performs performing downlink reception or uplink transmission in a wireless communication system by being executed by at least one processor to:

transmit information related to beam switching timing of the terminal;
receive configuration information for a predetermined threshold from the base station;
receive downlink control information (DCI) including information for the downlink reception or the uplink transmission from the base station; and
perform the downlink reception or the uplink transmission by applying one spatial parameter set among a plurality of spatial parameter sets based on the beam switching timing and the predetermined threshold.

# FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depend
on subcarr
spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG.4

# FIG.5

Resource grid

A carrier
(up to 3300 subcarriers,i,e.,275 RBs)

A BWP

1 RB=12 subcarrier

1 RE

1 subcarrier

1 Symbol

k=0

l=0 ·····

FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH | PDCCH/
PDSCH | PUSCH | PDCCH/
PDSCH

PDCCH/
PDSCH | PUSCH/
PUCCH

S601

S602

S603   S604   S605   S606

S607   S608

· DL/UL ACK/NACK
· UE CQI/PMI RI REPORT
  USING PUSCH AND PUCCH

EP 4 277 147 A1

# FIG.7

Start

Report information related to beam switching time — S710

Receive DCI — S720

Perform downlink reception or uplink transmission
by using spatial parameter set based on
beam switching time and predetermined threshold — S730

End

# FIG.8

DCI reception

First threshold

Second threshold

A

B

C

First spatial parameter set

First threshold : Second spatial parameter set

Second threshold : First spatial parameter set

Second spatial parameter set

# FIG.9

```
        START
          │
          ▼
┌─────────────────────────────┐
│ Report information related to│ ──── S910
│ beam switching timing        │
└─────────────────────────────┘
          │
          ▼
┌─────────────────────────────┐
│ Receive configuration        │ ──── S920
│ information                  │
│ for predetermined threshold  │
└─────────────────────────────┘
          │
          ▼
┌─────────────────────────────┐
│ Receive DCI                  │ ──── S930
└─────────────────────────────┘
          │
          ▼
┌─────────────────────────────┐
│ Perform downlink reception or│
│ uplink transmission          │
│ by using spatial parameter   │ ──── S940
│ set                          │
│ based on beam switching timing│
│ and predetermined threshold  │
└─────────────────────────────┘
          │
          ▼
         END
```

# FIG.10

```
        BS                                                    UE

                                                    S105
                      Capability information          ⟨
         ◄─────────────────────────────────────────────

                                                    S110
                          Configuration               ⟨
         ─────────────────────────────────────────────►

                                                    S115
                       Control information             ⟨
         ┄┄┄┄┄┄┄┄┄┄┄┄┄┄┄┄┄┄┄┄┄┄┄┄┄┄┄┄┄┄┄┄┄┄┄┄┄┄┄┄┄┄┄►

                                                    S120
                         Reference signal             ⟨
         ─────────────────────────────────────────────►

                                                    S125
                   CSI reporting / beam reporting      ⟨
         ◄─────────────────────────────────────────────
```

# FIG.11

EP 4 277 147 A1

## INTERNATIONAL SEARCH REPORT

| International application No. |
|---|
| **PCT/KR2022/000404** |

### A. CLASSIFICATION OF SUBJECT MATTER

**H04B 7/0408**(2017.01)i; **H04B 7/06**(2006.01)i; **H04B 17/373**(2014.01)i; **H04L 5/00**(2006.01)i

According to International Patent Classification (IPC) or to both national classification and IPC

### B. FIELDS SEARCHED

Minimum documentation searched (classification system followed by classification symbols)

H04B 7/0408(2017.01); H04B 7/06(2006.01); H04B 7/08(2006.01); H04W 48/20(2009.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 빔 스위치 시간(beam switch time), 임계치(threshold value), 하향링크 제어 정보 (downlink control information), 공간 파라미터(spatial parameter), SCS(subcarrier spacing)

### C. DOCUMENTS CONSIDERED TO BE RELEVANT

| Category* | Citation of document, with indication, where appropriate, of the relevant passages | Relevant to claim No. |
|---|---|---|
| Y | QUALCOMM INCORPORATED. Remaining Issues on Cross-Carrier Scheduling with Different Numerologies. R1-1911142, 3GPP TSG RAN WG1 Meeting #98bis. Chongqing, China. 05 October 2019. See section 2.1. | 1-15 |
| Y | US 2020-0029274 A1 (FG INNOVATION COMPANY LIMITED) 23 January 2020 (2020-01-23) See paragraphs [0056], [0112] and [0143]. | 1-15 |
| Y | NOKIA et al. Alignment of RRC parameter names for 38.214. R1-2008292, 3GPP TSG RAN WG1 Meeting #103-e, e-Meeting. 01 November 2020. See section 5.2.1.5.1a. | 2-7 |
| A | US 2020-0244340 A1 (QUALCOMM INCORPORATED) 30 July 2020 (2020-07-30) See paragraphs [0087]-[0119]; and figures 9-17. | 1-15 |
| A | WO 2020-229976 A1 (NOKIA SOLUTIONS AND NETWORKS OY) 19 November 2020 (2020-11-19) See paragraphs [0042]-[0082]; and figure 3. | 1-15 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 May 2022** | **03 May 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2022/000404**

| Patent document cited in search report | | | Publication date (day/month/year) | Patent family member(s) | | | Publication date (day/month/year) |
|---|---|---|---|---|---|---|---|
| US | 2020-0029274 | A1 | 23 January 2020 | CN | 112425198 | A | 26 February 2021 |
| | | | | EP | 3824562 | A1 | 26 May 2021 |
| | | | | US | 10972972 | B2 | 06 April 2021 |
| | | | | WO | 2020-015614 | A1 | 23 January 2020 |
| US | 2020-0244340 | A1 | 30 July 2020 | CN | 111742503 | A | 02 October 2020 |
| | | | | EP | 3756282 | A1 | 30 December 2020 |
| | | | | US | 10873386 | B2 | 22 December 2020 |
| | | | | US | 10879991 | B2 | 29 December 2020 |
| | | | | US | 2019-0260458 | A1 | 22 August 2019 |
| | | | | WO | 2019-164643 | A1 | 29 August 2019 |
| WO | 2020-229976 | A1 | 19 November 2020 | CN | 113875164 | A | 31 December 2021 |
| | | | | EP | 3970277 | A1 | 23 March 2022 |

Form PCT/ISA/210 (patent family annex) (July 2019)